# EUROPÄISCHE PATENTSCHRIFT

(11) **EP 1 717 098 B1**
(45) Veröffentlichungstag und Bekanntmachung des Hinweises auf die Patenterteilung: **11.02.2009**
(21) Anmeldenummer: 06008512.3
(22) Anmeldetag: 25.04.2006
(51) Int. Cl.: B60N 2/30, B60N 2/22

(54) **Fahrgastsitz für Personenbeförderungsfahrzeuge**
Passenger seat for public transportation vehicle
Siège de passager pour véhicule de transport en commun

(30) Priorität: 30.04.2005 DE 102005020224
(43) Veröffentlichungstag der Anmeldung: 02.11.2006
(73) Patentinhaber: Vogelsitze GmbH, 76228 Karlsruhe (DE)
(72) Erfinder: Bilfinger, Jan, 76228 Karlsruhe (DE)
(74) Vertreter: Dimmerling, Heinz

(56) Entgegenhaltungen:
- WO-A-01/05619
- GB-A- 2 017 014
- US-A- 1 770 321
- US-A- 2 621 708
- US-A- 5 707 103

## Beschreibung

Die Erfindung betrifft einen Fahrgastsitz nach dem Oberbegriff des Anspruchs 1, für Personenbeförderungsfahrzeuge, insbesondere für Busse und Bahnen, mit einer Rückenlehne und einem hochklappbaren Sitzteil.

Ein derartiger Fahrgastsitz ist im Stand der Technik hinreichend bekannt und wird insbesondere in Fahrzeugen zur Beförderung behinderter, an einen Rollstuhl gefesselter Personen verwendet.

Bei Verwendung eines derartigen Fahrgastsitzes besteht die Möglichkeit, dass die behinderte Person beim Personentransport im Rollstuhl sitzen bleiben kann. Hierzu muss vor der Fahrt das Sitzteil hochgeklappt und die behinderte Person mit ihrem Rollstuhl derart vor die Rückenlehne positioniert werden, dass der Rollstuhl mit der Rückenlehne verbunden werden kann.

Da die Rückenlehne alle Beschleunigungskräfte aufnehmen muss, welche insbesondere bei einer starken Bremsung oder einem Auffahrunfall sehr groß sein können, ist bei dem bekannten Sitz die Rückenlehne mittels massiver Füße fest mit dem Fahrzeugboden verschraubt. Hierdurch wird zwar die erforderliche Festigkeit erreicht, jedoch gestaltet sich das Entfernen der Rückenlehne aus dem Fahrzeug recht aufwendig. Die Rückenlehne wird daher in der Regel nicht aus dem Fahrzeug entfernt, sondem verbleibt dauerhaft im Fahrzeug, so dass das Fahrzeug im Wesentlichen nur für einen Behindertentransport nutzbar ist.

Zwar lässt sich der bekannte Fahrgastsitz bei heruntergeklapptem Sitzteli auch als Fahrgastsitz für nicht behinderte Personen verwenden, jedoch muss bei der Anordnung der Sitze berücksichtigt werden, dass die Rückenlehnen bei einem Behindertentransport mit Rollstühlen erreichbar sind. Hierdurch ist es erforderlich, zwischen den einzelnen Sitzen entsprechend große Zwischenräume zu lassen.

Aus der US 5,707,103 A, von der die vorliegende Erfindung als nächstkommender Stand der Technik ausgeht, ist eine Sitzanordnung für ein Personenbeförderungsfahrzeug bekannt, welche aus einer Rückenlehne und einem hochklappbaren Sitzteil besteht. Die Sitzanordnung ist um eine etwa senkrecht zum Fahrzeug wohl verlaufende Achse schwenkbar, wodurch sie bei Nichtbenutzung so verschwenkt werden kann, dass sich Rückenlehne und hochgeklapptes Sitzteil parallel zur Seitenwand des Fahrzeugs befinden.

Des Weiteren ist aus der US 1,770,321 A ein um eine etwa senkrecht zum Fahrzeugboden verlaufende Achse schwenkbrer Sitz bekannt.

Darüber hinaus ist aus der WO 01/05619 A ein Rücksitz eines Kraftfahrzeuges bekannt, bei dem die Rückenlehne um eine etwa senkrecht zum Fahrzeugboden verlaufende Achse schwenkbar ist.

Weiterhin ist aus der GB 2 017 014 A ein Rollstuhl bekannt, bei dem ein aus Rückenlehne, Sitzteil und Fußstützen bestehendes Gestell um eine etwa senkrecht angeordnete Achse verschwenkt werden kann.

Es ist Aufgabe der Erfindung, einen eingangs genannten Fahrgastsitz derart auszubilden, dass er auf einfache Weise aus seiner Position entfernbar ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere für Busse und Bahnen, mit einer Rückenlehne und einem hochklappbaren Sitzteil, dadurch gekennzeichnet, dass die Rückenlehne um eine etwa senkrecht zum Fahrzeugboden verlaufende Achse schwenkbar ausgebildet ist.

Dadurch, dass die Rückenlehne um eine etwa senkrecht zum Fahrzeugboden verlaufende Achse schwenkbar ausgebildet ist, lässt sie sich auf einfache Weise aus einem zentralen Bereich des Personenbeförderungsfahrzeugs in einen Randbereich, beispielsweise an eine Seitenwand des Personenbeförderungsfahrzeugs, schwenken. Hierdurch kann die Rückenlehne auf einfache Weise in eine Position gebracht werden, in der sie nicht stört. Der Innenraum des Personenbeförderungsfahrzeugs ist daher bei verschwenkten Rückenlehnen im Wesentlichen frei, so dass das Personenbeförderungsfahrzeug beispielsweise zum Gütertransport verwendet werden kann.

Durch die Möglichkeit der Verschwenkung der Rückenlehnen braucht der Raum zwischen zwei Rückenlehnen auch nicht mehr so groß gewählt werden, dass er Platz für einen Rollstuhl bietet. Soll an einer Rückenlehne ein Rollstuhl befestigt werden, kann die davor angeordnete Rückenlehne in eine Platz sparende Position verschwenkt werden, so dass für einen Rollstuhl genügend Raum vorhanden ist.

Hierdurch lassen sich in dem Personenbeförderungsfahrzeug in vorteilhafter Weise Sitze so anordnen, wie sie üblicher Weise in Personenbeförderungsfahrzeugen angeordnet sind. Somit eignet sich ein mit erfindungsgemäßen Fahrgastsitzen ausgerüstetes Personenbeförderungsfahrzeug in gleicher Weise zum Personentransport, wie mit herkömmlichen Fahrgastsitzen ausgerüstete Personenbeförderungsfahrzeuge.

In vorteilhafter Weise ist die Rückenlehne an einem ersten Schwenkarm befestigt, welcher um die Achse schwenkbar ist Hierbei ist es besonders vorteilhaft, wenn die Rückenlehne schwenkbar und in unterschiedlichen Positionen arretierbar an dem Schwenkarm befestigt ist.

Insbesondere dadurch, dass die Rückenlehne schwenkbar an dem Schwenkarm befestigt ist, lässt sie sich so anordnen (eingeschwenkte Position), dass sie sich sehr Platz sparend an der Seitenwand des Personenbeförderungsfahrzeugs befindet. Andererseits lässt sie sich so anordnen (ausgeschwenkte Position), dass sie eine zur Befestfgung eines Rollstuhls ideale Lage hat beziehungsweise bei der Verwendung des Fahrgastsitzes als normaler Fahrgastsitz in einer für den Fahrgast bequemen Lage angeordnet sein kann.

Bei einer weiteren besonderen Ausführungsform der Erfindung ist vorgesehen, dass das Sitzteil an einem zweiten Schwenkarm hochklappbar befestigt ist, welcher ebenfalls um eine etwa senkrecht zum Fahrzeugboden verlaufende Achse schwenkbar ist. Zwar dürfte es zweckmäßig sein, dass der zweite Schwenkarm um dieselbe Achse schwenkbar ist, wie die der erste Schwenkarm, jedoch ist dies nicht zwingend erforderlich. Sollte es aus baulichen Gründen erforderlich sein, dass erst der Schwenkarm um eine andere Achse schwenkbar ist als der zweite Schwenkarm, so kann dies problemlos realisiert werden. Hierbei ist jedoch zu beachten, dass Sirizteil und Rückenlehne im ausgeschwenkten Zustand aneinander angepasst sein müssen.

Sehr vorteilhaft ist eine Ausführungsform der Erfindung, bei der die Schwenkarme in unterschiedlichen Positionen arretierbar sind. Sind die Arretierungen so ausgebildet, dass sie durch ein Rastelement gebildet sind, lassen sich die Schwenkarme und damit das Rückenteil beziehungsweise das Sitzteil auf einfache Weise und sehr schnell in ihre entsprechenden Positionen bringen.

Bei einer weiteren besonderen Ausführungsform der Erfindung ist vorgesehen, dass die Rückenlehne aus einem Grundelement besteht, an welchem beidseits Seitenteile angeordnet sind. Hierdurch besteht die Möglichkeü, das Grundelement so schmal auszubilden, dass es zwischen zwei regelmäßig an einem Rollstuhl vorhandene Handgriffe zum Schieben des Rollstuhls passt, wodurch die Rückenlehne des Rollstuhls dicht an dem Grundelement angeordnet werden kann. Die Seitenteile sind so ausgebildet, dass sie das Grundelement zu einer herkömmlichen Rückenlehne ergänzen.

In vorteilhafter Weise sind die Seitenteile an dem zweiten Schwenkarm befestigt, so dass sie sich von dem Grundelement wegschwenken lassen. Die Seitenteile können jedoch auch verschiebbar an dem ersten Schwenkarm befestigt sein, wie dies bei einer weiteren besonderen Ausführungsform der Erfindung vorgesehen ist. Hierdurch können die Seitenteile soweit von dem Grundelement entfernt werden, dass die Handgriffe des Rollstuhls in den nach Verschiebung der Seitenteile zwischen den Seitenteilen und dem Grundelement ausgebildeten Spalt eingebracht werden können. Grundsätzlich wäre es jedoch auch möglich, in der Rückenlehne Öffnungen vorzusehen, in die die Handgriffe des Rollstuhls eingebracht werden könnten.

Durch die Seitenteile lässt sich die Rückenlehne problemlos verbreitem, wodurch erreicht werden kann, dass sie in nicht verbreitertem Zustand optimal an einen Rollstuhl angepasst ist und im verbreiterten Zustand die Maße einer üblichen Rückenlehne hat. Sehr vorteilhaft hierbei ist es, wenn die Seitenteile mit der Rückenlehne fest verbindbar sind. Dies kann beispielsweise mittels schnell verschiebbarer Bolzen geschehen.

Dadurch, dass der Rollstuhl sehr dicht an das Grundelement herangebracht werden kann, wird die Rückenlehne des Rollstuhls in vorteilhafter Weise durch das Grundelement ergänzt beziehungsweise verstärkt. Hierdurch ist es auch möglich, dass der Rollstuhlfahrer einen gegebenenfalls vorhandenen Sicherheitsgurt des Fahrgastsitzes verwendet. Dies wirkt sich sehr vorteilhaft auf die Sicherheit des Rollstuhffahrers aus.

Bei einer weiteren besonderen Ausführungsform der Erfindung ist vorgesehen, dass die Schwenkarme schwenkbar an einer Tragsäule befestigt sind. In vorteil hafter Weise ist die Tragsäule fest im Fahrzeugboden verankert, so dass sie die bei einem Crash auftretenden Kräfte aufnehmen kann. Durch die Tragsäule lassen sich die Rückenlehne und das Sitzteil auf einfache Weise verschwenken.

Eine besonders stabile Verbindung der Tragsäule mit dem Fahrzeug lässt sich dadurch erreichen, dass die Tragsäule auf einem im Fahrzeugboden verlaufenden Querträger angeordnet ist. Der Querträger kann so ausgebildet sein, dass er sich bis über den Radkasten des Fahrzeugs erstreckt, so dass die Tragsäule auf dem Radkasten angeordnet sein kann.

Statt dass die Schwenkarme an einer Tragsäule befestigt sind, können sie beispielsweise an der Seitenwand des Fahrzeugs befestigt sein. Hierzu müssen in geeigneter Weise an der Seitenwand des Fahrzeugs Gelenke angeordnet werden, mittels welcher eine Verschwenkung der Schwenkarme ermöglicht wird. Durch den erfindungsgemäß ausgebildeten Fahrgastsitz lässt sich ein mit diesem Fahrgastsitz ausgerüstetes Fahrzeug in sehr kurzer Zeit an beliebige Bedürfnisse anpassen. Da eine Umrüstung nicht erforderlich ist, lässt sich das Fahrzeug in kürzester Zeit von einem Personenbeförderungsfahrzeug für nicht behinderte Personen zu einem Fahrzeug für einen Behindertentransport einrichten. In genauso kurzer Zeit lässt sich das Fahrzeug aber auch zu einem Transportfahrzeug für insbesondere sperrige Güter einrichten.

Des Weiteren lässt sich das Fahrzeug an einen jeweiligen Bedarfsfall anpassen, ohne dass hierbei Fahrgastsitze ausgebaut beziehungsweise ausgetauscht werden müssen. Insbesondere dadurch, dass kein Austausch von Fahrgastsitzen erforderlich ist, entfällt die Notwendigkeit, den jeweils nicht benutzten Fahrgastsitz aufzubewahren. Es braucht somit in vorteilhafter Weise kein Raum zur Aufbewahrung von nicht benutzten Fahrgastsitzen zur Verfügung gestellt werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung eines erfindungsgemäß ausgebildeten Fahrgastsitzes in perspektivischer Darstellung,
- Figur 2: den in Figur 1 dargestellten Fahrgastsitz mit einem davor angeordneten Rollstuhl in perspektivischer Darstellung,
- Figur 3: die in Figur 2 dargestellte Anordnung von der Seite, und
- Figur 4: den in Figur 1 dargestellten Fahrgastsitz in eingeschwenktem Zustand.

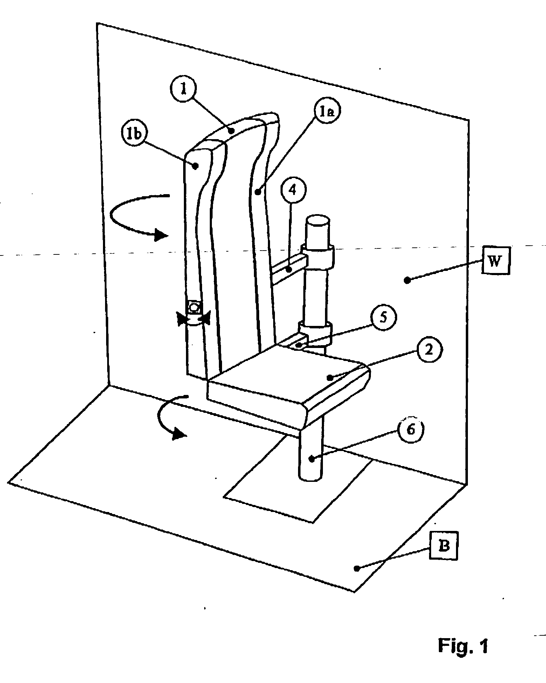

Wie Figur 1 entnommen werden kann, besteht eine Rückenlehne 1, 1a, 1b eines Fahrgastsitzes für ein Personenbeförderungsfahrzeug aus einem Grundelement 1 und zwei beidseits am Grundelement 1 angeordneten Seitenteilen 1a, 1b. Die Seitenteile 1a, 1 b sind zwar fest jedoch schnell lösbar mit dem Grundelement 1 verbunden.

Die Rückenlehne 1, 1a, 1 b ist an einem ersten Schwenkarm 4 derart befestigt, dass sie etwa um einen Winkel von plus/minus 45 Grad um den ersten Schwenkarm 4 schwenkbar ist. Der erste Schwenkarm 4 ist seinerseits schwenkbar an einer Tragsäule 6 befestigt. Die Tragsäule 6 ist fest im Fahrzeugboden B des Fahrzeugs verankert.

An der Tragsäule 6 ist weiterhin ein zweiter Schwenkarm 5 schwenkbar befestigt, an welchem ein Sitzteil 2 befestigt ist. Das Süzteil 2 ist derart am zweiten Schwenkarm 5 befestigt, dass es um einen Winkel von etwa 90 Grad um den zweiten Schwenkarm 5 geschwenkt werden kann.

Die Tragsäule 6 weist im Bereich der Befestigungen der Schwenkarme 4, 5 in der Zeichnung nicht dargestellte Ausnehmungen auf, in welche in der Zeichnung ebenfalls nicht dargestellte Rastelemente eingreifen. Hierdurch lassen sich die Schwenkarme 4, 5 in vorbestimmten Positionen arretieren. Insbesondere lassen sie sich in einer zur Seitenwand W des Fahrzeugs etwa 90 Grad verlaufenden Position sowie in einer zur Fahrzeugwand W etwa parallel verlaufenden Position arretieren.

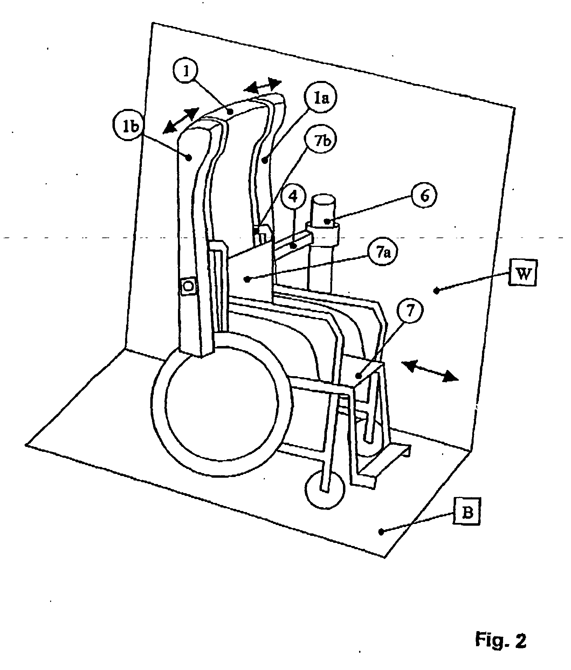

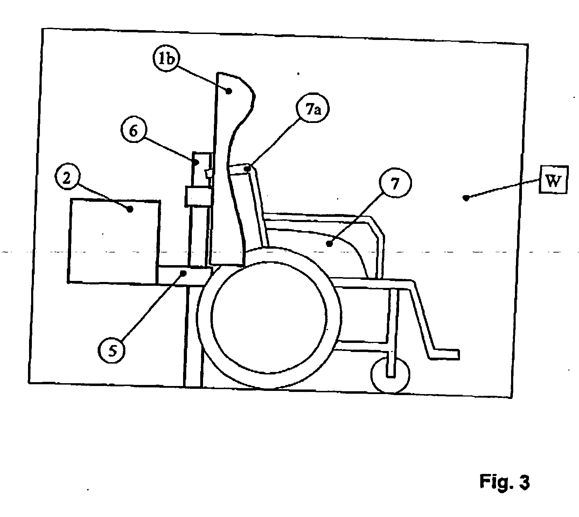

Wie den Figuren 2 und 3 entnommen werden kann, lässt sich ein Rollstuhl 7 so vor der Rückenlehne 1, 1a, 1b anordnen, dass die Rückenlehne 7a des Rollstuhls 7 durch das Grundelement 1 der Rückenlehne 1, 1a, 1b des Fahrgastsitzes ergänzt wird.

Damit die Rückenlehne 7a des Rollstuhls 7 möglichst nah an das Grundelement 1 herangebracht werden kann, sind die Seitenteile 1a. 1b etwas seitlich verschoben, so dass zwischen dem Grundelement 1 und den Seitenteilen 1a, 1b jeweils ein Spalt vorhanden ist. In diesen Spalt lassen sich die Handgriffe 7b des Rollstuhls 7 einbringen.

Der Rollstuhl 7 ist mittels in den Figuren 2 und 3 nicht dargestellter Gurte fest mit der Rückenlehne 1, 1a, 1 b verbunden. Da die Verbindung auf herkömmliche Weise geschehen kann, wird hierauf nicht näher eingegangen.

Dadurch, dass die Rückenlehne 7a des Rollstuhls 7 durch das Grcrndelement 1 des Fahrgastsitzes ergänzt wird, lässt sich ein Sicherheitsgurt des Fahrgastsitzes vom Rollstuhlfahrer benutzen. Dies wirkt sich sehr vorteilhaft auf die Sicherheit der zu befördernden Person aus.

Wie insbesondere Figur 3 entnommen werden kann, ist dann, wenn vor der Rückenlehne 1, 1a, 1b ein Rollstuhl 7 angeordnet ist, der zweite Schwenkarm 5, an dem das Sitzteil 2 befestigt ist, soweit verschwenkt, dass das Sitzteil 2 der Anordnung des Rollstuhls 7 vor der Rückenlehne 1, 1a, 1b nicht im Wege steht. Zweckmäßigerweise ist der zweite Schwenkarm 5 in seiner etwa parallel zur Seitenwand W des Fahrzeugs verlaufenden Position arretiert. In dieser Position ist das Sitzkissen 2 soweit um den zweiten Schwenkarm 5 verschwenkt, dass es ebenfalls etwa parallel zur Seitenwand W des Fahrzeugs angeordnet ist.

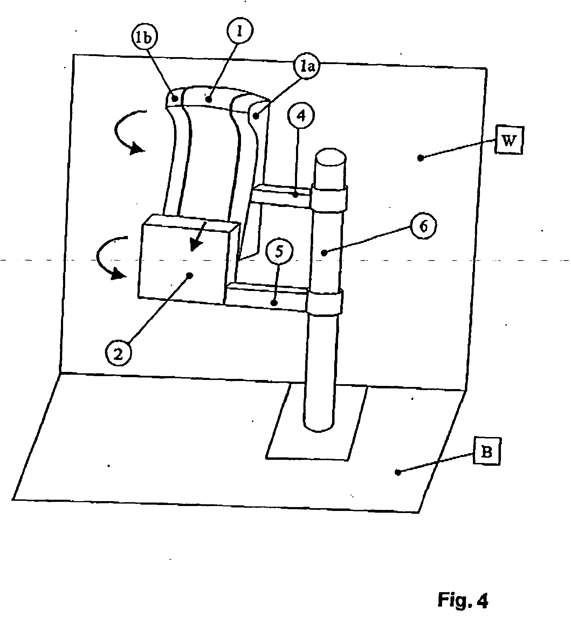

Wie Figur 4 entnommen werden kann, lassen sich der erste Schwenkarm 4 und der zweite Schwenkarm 5 soweit um die Tragsäule 6 verschwenken, dass sie etwa parallel zur Seitenwand W des Fahrzeugs verlaufen. In dieser Stellung ragen sie nicht mehr in das Zentrum des Fahrzeuginnenraums hinein, so dass der Fahrzeuginnenraum weitestgehend beispielsweise zum Gütertransport verwendet werden kann.

## Patentansprüche

1. Fahrgastsitz für Personenbeförderungsfahrzeuge, insbesondere für Busse und Bahnen, mit einer Rückenlehne (1,1a,1b) und einem hochklappbaren Sitzteil (2), wobei die Rückenlehne (1, 1 a, 1b) an einem ersten Schwenkarm (4) befestigt ist, welche um eine etwa senkrecht zum Fahrzeugboden verlaufende Achse (3) schwenkbar ausgebildet ist, **dadurch gekennzeichnet,**
**dass** das Sitzteil (2) an einem zweiten Schwenkarm (5) hochklappbar befestigt ist, welcher um eine etwa senkrecht zum Fahrzeugboden ver- laufende Achse (3) schwenkbar ist.

2. Fahrgastsitz nach Anspruch 1,
**dadurch gekennzeichnet,**
**dass** die Rückenlehne (1,1a, 1b) schwenkbar und in unterschiedlichen Positionen arretierbar an dem ersten Schwenkarm (4) befestigt ist.

3. Fahrgastsitz nach einem der Ansprüche 1 oder 2,
**dadurch gekennzeichnet,**
**dass** der erste Schwenkarm (4) und/oder der zweite Schwenkarm (5) in unterschiedlichen Positionen arretierbar ist.

4. Fahrgastsitz nach einem der Ansprüche 1 bis 3,
**dadurch gekennzeichnet,**
**dass** die Rückenlehne (1, 1a, 1b) aus einem Grundelement (1) besteht, an welchem beidseits Seitenteile (1a, 1b) angeordnet sind.

5. Fahrgastsitz nach Anspruch 4,
**dadurch gekennzeichnet,**
**dass** die Seitenteile (1a, 1b) an dem zweiten Schwenkarm (5) befestigt sind.

6. Fahrgastsitz nach Anspruch 4,
**dadurch gekennzeichnet,**
**dass** die Seitenteile (1a, 1b) verschiebbar an dem ersten Schwenkarm (4) befestigt sind.

7. Fahrgastsitz nach einem der Ansprüche 1 bis 6,
**dadurch gekennzeichnet,**
**dass** die Schwenkarme (4, 5) schwenkbar an einer Tragsäule (6) befestigt sind.

8. Fahrgastsitz nach Anspruch 7,
**dadurch gekennzeichnet,**
**dass** die Tragsäule (6) auf einem im Fahrzeugboden verlaufenden Querträger angeordnet ist.

## Claims

1. Passenger seat for public transportation vehicles, in particular for buses and railway vehicles, comprising a backrest (1, 1a, 1b) and a seat portion (2) which can be folded up, wherein the backrest (1, 1a, 1b) is attached to a first pivot arm (4) which is pivotable about an axis (3) arranged approximately perpendicularly to the vehicle floor, **characterised in that** the seat portion (2) is attached to a second pivot arm (5) so that it can be folded up, said pivot arm being pivotable about an axis (3) running approximately perpendicularly to the vehicle floor.

2. Passenger seat according to claim 1, **characterised in that** the backrest (1, 1a, 1b) is attached to the first pivot arm (4) so that it is pivotable and lockable in different positions.

3. Passenger seat according to one of the claims 1 or 2, **characterised in that** the first pivot arm (4) and/or the second pivot arm (5) is lockable in different positions.

4. Passenger seat according to one of the claims 1 to 3, **characterised in that** the backrest (1, 1a, 1b) comprises a base element (1) on which side portions (1a, 1b) are arranged on both sides.

5. Passenger seat according to claim 4, **characterised in that** the side portions (1a, 1b) are attached to the second pivot arm (5).

6. Passenger seat according to claim 4, **characterised in that** the side portions (1a, 1b) are displaceably attached to the first pivot arm (4).

7. Passenger seat according to one of the claims 1 to 6, **characterised in that** the pivot arms (4, 5) are pivotably attached to a support column (6).

8. Passenger seat according to claim 7, **characterised in that** the support column (6) is arranged on a crossmember running within the vehicle floor.

## Revendications

1. Siège de passager pour des véhicules de transport en commun, notamment pour des autobus et des trains, avec un dossier (1, 1a, 1b) et avec une partie d'assise (2) relevable, sachant que le dossier (1, 1a, 1b) est fixé à un premier bras pivotant (4) qui est conçu à pivotement autour d'un axe (3) s'étendant environ perpendiculairement au plancher du véhicule, **caractérisé en ce que** la partie d'assise (2) est fixée avec possibilité de relevage à un second bras pivotant (5) qui est pivotant autour d'un axe (3) s'étendant environ perpendiculairement au plancher du véhicule.

2. Siège de passager selon la revendication 1, **caractérisé en ce que** le dossier (1, 1a, 1b) est fixé au premier bras pivotant (4) à pivotement et en pouvant être bloqué dans différentes positions.

3. Siège de passager selon la revendication 1 ou 2, **caractérisé en ce que** le premier bras pivotant (4) et/ou le second bras pivotant (5) peuvent être bloqués dans différentes positions.

4. Siège de passager selon l'une des revendications 1 à 3, **caractérisé en ce que** le dossier (1, la, 1b) est constitué d'un élément de base (1) contre lequel sont disposées de part et d'autre des parties latérales (1a, 1b).

5. Siège de passager selon la revendication 4, **caractérisé en ce que** les parties latérales (1a, 1b) sont fixées au second bras pivotant (5).

6. Siège de passager selon la revendication 4, **caractérisé en ce que** les parties latérales (1a, 1b) sont fixées avec possibilité de coulissement au premier bras pivotant (4).

7. Siège de passager selon l'une des revendications 1 à 6, **caractérisé en ce que** les bras pivotants (4, 5) sont fixés à pivotement à une colonne porteuse (6).

8. Siège de passager selon la revendication 7, **caractérisé en ce que** la colonne porteuse (6) est disposée sur une traverse s'étendant dans le plancher du véhicule.
